# EUROPEAN PATENT SPECIFICATION

(11) **EP 1 174 205 B1**
(45) Date of publication and mention of the grant of the patent: **04.05.2005**
(21) Application number: 01500138.1
(22) Date of filing: 06.06.2001
(51) Int. Cl.: B23D 25/02

(54) **Rotary shearing machine with guides for the dies**
Fliegende Schere mit Schneidwerkzeugführungen
Cisaille volante avec éléments de guidage pour les outils de coupe

(30) Priority: 17.07.2000 ES 200001773
(43) Date of publication of application: 23.01.2002
(73) Proprietor: FAGOR, S.Coop, 20500 Mondragon (Guipuzcoa) (ES)
(72) Inventor: Mas Acuna, Alberto, 20013 San Sebastian (Gipuzkoa) (ES); Ortiz del Rio, Inaki Martinez, 01007 Vitoria (Araba) (ES)
(74) Representative: Fernandez Guzman, Juan

(56) References cited:
- ES-A- 2 143 895
- US-A- 4 027 564

## Description

The present invention relates to a rotary shearing machine for the continuous cutting of strip sheet, in which the blades are rotary and are superimposed on the cutting plane, according to the preamble of claim 1.

### PRIOR ART

ES-2143895-A (Application n° P 9601344) describes a rotary shearing machine of the type claimed, comprising two blade-holder supports or upper and lower die parts, both rotary, on either side of the metal strip, and extending between side pillars of the machine. The strip sheet defines a horizontal cutting line on which the blades are located after being moved vertically in an upward and downward direction, respectively, in their rotation. Each die is supported by a rotary holder beam whose synchronised rotation is performed by a pair of eccentric shafts driven by a set of gear wheels from one of the side pillars. The coupling of each die holder to its support on the machine frame comprises a vertical cylindrical swivel member, around which the die holder rotates to change the angle of inclination of the cutting line in relation to the direction of travel of the sheet strip. Parallelism between the upper and lower blades along their whole length is achieved by means of telescopic side guides linking both die holders together. This document represents the closest prior art.

US-4027564 describes a rotary shearing machine of the type with symmetrical blade holder beams, linked together by two side guides, in which a pair of wedges are fitted, adjusted in each case to achieve the perfectly parallel setting of the blades, so that the rows of dies meet up with each other appropriately at the time of cutting.

### DISCLOSURE OF THE INVENTION

The object of the present invention is a sheet strip shearing machine, with synchronised rotary upper and lower cutting dies for the transverse cutting of sheet metal, as defined in the claims.

The shearing machine according to the present invention comprises a set of gears above and below for the synchronised rotation of the two die holder beams or upper and lower blade-holders, an eccentric drive to confer rotary movement, means for individual swivelling of the holder beams horizontally to effect an angled cut in relation to the direction of travel of the sheet strip, and side guide means joining the holder beams parallel to each other for the meeting of the upper and lower die blades aligned perfectly according to a cutting line along their whole length.

The problem solved by the invention is the absence of parallelism between the upper and lower blades due to wear on the side guides subjected to stress resulting from the imbalance between the rotary movement drives of both die holder beams. The imbalance arises right from the outset due to the deviations in the coupling of the gear set, with the result that the dies and side guides linking their holder beams are set at an angle in relation to the vertical plane. Use of the shearing machine also leads to wear in the gear set, which increases the stress undergone by the side guides and at the same time causes wear in the guides, resulting in misalignment between the blades, which calls for premature replacement of the gear set and guides of the shearing machine. This problem is solved by a machine having the features of claim 1.

To overcome the above-mentioned problem, the rotary die shearing machine has a flexible coupling of each die holder beam in relation to its respective rotary movement drive element. Said flexible coupling comprises a vertical member for swivelling the die holder beam, which is used to perform the angled cutting of the sheet strip. During the vertical rotation for cutting, the swivelling member also permits the rotation of the dies according to a horizontal plane for angled cutting, a slight angular rocking of the die from one side to another, which counteracts the horizontal stress component in the guides, and thereby prevents deviations in the initial parallelism of the guides and delays wear in the guides and the gears to lengthen their service life.

### BRIEF DESCRIPTION OF THE DRAWINGS

FIG. 1 is a front elevational view of a shearing machine according to the invention.
FIG. 2 is a profile sectional view of the shearing machine in figure 1, showing the rotary die holder beams and their coupling means.
FIG. 3 is a partial sectional view of the shearing machine according to figure 2, showing the rotary movement transmission means and a positional deviation in the side guides of both die holder beams.
FIG. 4 is a close sectional view of the means for coupling the die holder beam of figure 2.

### DESCRIPTION OF THE PREFERRED EMBODIMENT OF THE INVENTION

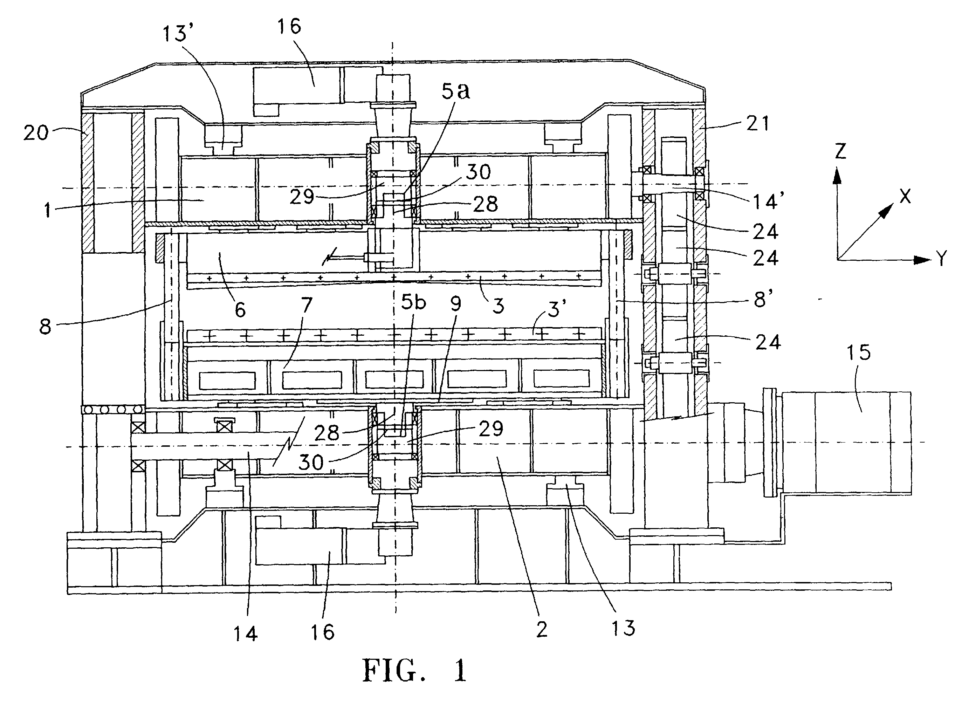

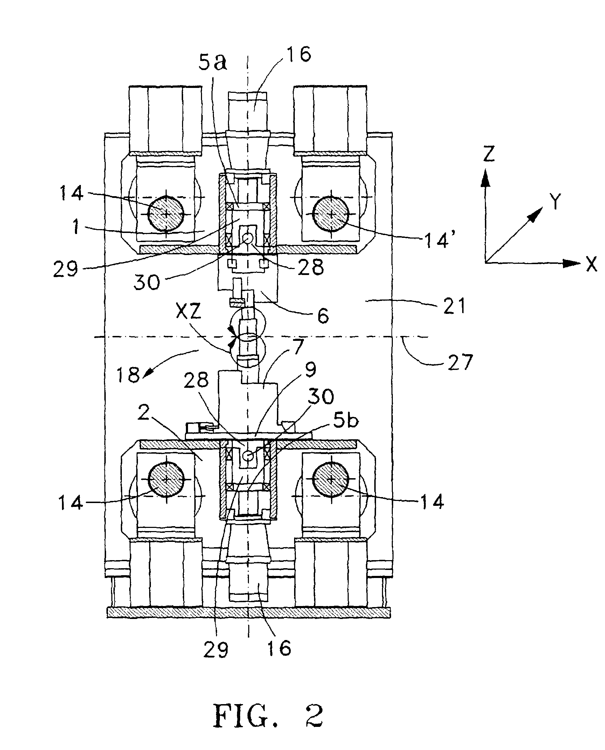

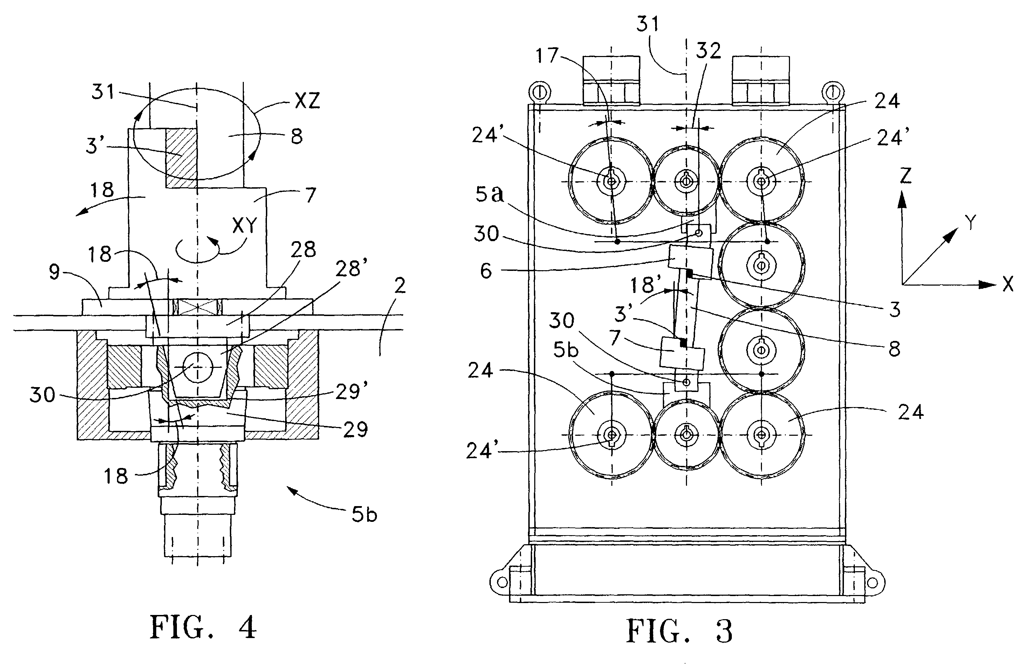

With reference to figures 1 to 4, a preferred shearing machine embodiment according to the invention comprises a rotary upper holder beam 1 and lower holder beam 2 respectively, the cutting dies 6 and 7, which hold the corresponding parallel blades 3,3' (fig. 3 and 4) extending in a horizontal direction Y. The sheet strip advances in the horizontal direction X. The die holder beams 1 and 2 effect a counter rotary movement according to a vertical plane, both moving in an opposing way in direction Z vertical to the sheet strip. The blades 3,3' are juxtaposed parallel and aligned on a sheet strip cutting line 27 on the horizontal plane XY.

The die holder beams 1 and 2 are coupled to a respective eccentric upper 13,14 and lower 13',14' element for transmission of the rotary cutting movement, with at least one pair of eccentric shafts 14,14', supported on two side pillars 20 and 21 of the shearing machine. The pairs of eccentric shafts 14,14' are driven by a single motor 15 by way of a set of gears 24 laid out in the frame of the machine, with a drive part 24 located along the column 21 and two driving gear parts 24 above and below each die holder beam (fig. 1 and 3).

To make an angled cut in the sheet strip with regard to direction Y, the holder beams 1 and 2 with their dies 6 and 7 have to perform a swivelling movement according to the horizontal plane "XY", for which they have a respective axial swivelling member, coupled to a gear motor 16 by way of a vertical swivelling shaft 29. Said coupling of the rotary holder beams 1,2 is removable by means of said members 5a, 5b, as the dies have to be replaced for making different profile cuts.

The die holder beams 1 and 2 are linked by two telescopic type side guides 8 and 8', which accompany the holder beams 1 and 2 in their rotation for an angled cut, thereby maintaining the respective blades 3 and 3' parallel and in alignment with each other.

As a result of the assembly clearances in the gear set (fig. 3), the shafts 24' of the upper and lower driving gear wheels adopt initially a setting angle between their "zero" rest positions. The plane linking the rows of blades 3,3' must be parallel to the theoretical vertical plane 31 linking the shafts 24' of both parts of the upper and lower drive gears 24, in their "zero" rest position. The dies 6 and 7 and the guides 8,8' coupling them thus initially adopt an angle of inclination 18' (fig. 3) offset in respect of said central plane 31, which, should this be 1 degree for instance, becomes a linear displacement 32 of one of the blades 3,3' equal to 21 mm approximately. By means of the swivelling members a, b, each die holder beam 1 and 2 can also make a rocking movement 18 (fig. 4) to both sides, thereby compensating for the initial angular displacement 18' of the guides 8,8'.

Ongoing use of the shearing machine gives rise to a play in the guides 8,8' due to wear, caused by said imbalance 17 in the gear set 24. Thus, the guides 8,8' are subjected to a horizontal component stress, which would lead to misalignment of the blades 3,3', so that they would end up colliding with each other. The misalignment of the blades 3,3' due to play generated in each side guide 8,8' is prevented by means of an angular rocking movement 18 of each die 6 and 7 separate from its respective holder beam 1,2, with the result that the vertical push-pull forces of both die holder beams 1 and 2 are transmitted to each part of the guides 8 and 8' according to perfectly parallel action lines.

For the upper 6 and lower 7 dies to make said rocking movement 18 to both sides, the upper die 6 is linked directly to the swivel shaft 29 by means of a shaft support 28, while the lower die 7 is linked to the swivel shaft 29 by way of a table 9 on the lower holder beam 2. In its rotation movement the swivel shaft 29 draws the holder beam 1,2 according to a horizontal plane XY for the angled cut. The rocking support 28 permits the rocking 18 of the die 6,7 from one side to another, according to a plane YZ.

The shaft support 28 has a cylindrical end 28' fitted in a cylindrical seat 29' machined in the swivel shaft 29. Both parts, the rocking support 28 and the swivel shaft 29, are linked by a pin bolt 30, extending according to the horizontal direction Y (fig. 4), and the rocking 18 takes place around the pin bolt 30. The theoretical vertical plane ZY linking both rocking pins 30 of each die 6,7 is made to line up with the plane linking the rows of blades 3,3'.

Both cylindrical parts 28' and 29', one fitted into the other, of the swivelling members 5a and 5b each have one half of their length, of opposing frustoconical surfaces, with an inclination equal to 1 degree. The angle 18 rocked from one side to the other by each die 6,7 will depend on the magnitude of the horizontal force component on the guides, produced by the clearances in the gear set 24, and in guides 8 and 8' up to a maximum value for instance of 1 degree, although this degree of rocking is never reached as, before this happens, the gears 24 and the side guides 8,8' of the holder beams 1,2 are replaced.

## Claims

1. Rotary shearing machine with die guides (8,8') for cutting sheet strip (27) travelling in a horizontal direction "X", of the type that has two upper (6) and lower (7) dies extending in a horizontal direction "Y" and supported their respective rotary holder beam (1,2) and provided with a cutting blade (3,3') which lie on a cutting line on the sheet strip (27) after being moved up and down in vertical direction "Z" by means of the synchronised counter rotation of the die holder beams (1,2), which are driven for this cutting movement by a set of gears (24), each die holder beam (1,2) having an axial member (5a,5b) for swivelling purposes on a horizontal plane "XY", provided with a vertical swivel shaft (29) to perform an angled cut in sheet metal, and the aforesaid telescopic side guides (8,8'), which couple both die holder beams (1,2) on either side so as to maintain the parallelism between both blades (3,3'), **characterised in that** the dies (6,7) perform a vertical rocking movement (18) to one side and the other offsetting the out-of-parallelism (18') between said side guides (8,8'), for which they have a respective rocking support (28) coupled to the holder beam (1,2) swivel shaft (29).

2. The rotary shearing machine of claim 1, **characterised in that** said coupling between the die rocking support (28) and the die holder beam (a,b) swivel shaft (29) comprises the tongue and groove jointing of two cylindrical parts (28',29') with opposing frustoconical surfaces, which have an angle of inclination (18) equivalent to a pre-set maximum degree of rocking, and a pin bolt (30) which links both coupled cylindrical parts (28', 29') acting as a swivel shaft (18) for the die (6,7).

## Patentansprüche

1. Fliegende Schere mit Schneidwerkzeugführungen zum Schneiden eines Blechstreifens (27), der in einer horizontalen Richtung "X" vorrückt, mit zwei Schneidwerkzeugen, einem oberen (6) und einem unteren (7), welche sich in einer horizontalen Richtung "Y" erstrecken und jeweils von einem drehbaren Tragrahmen (1, 2) getragen werden, und mit einem Messer (3, 3') ausgestattet sind, die nach dem Hin- und Herverschieben mittels synchroner Gegendrehung der Schneidwerkzeug-Tragrahmen (1, 2) in vertikaler Richtung "Z" in einer Schnittlinie über dem Blechstreifen (27) liegen, wobei die Tragrahmen für diese Schnittverschiebung durch einen Zahnradsatz (24) angetrieben werden, und jeder Schneidwerkzeug-Tragrahmen (1,2) eine axiale Welle (5a,5b) für seine Drehbewegung in einer horizontalen Ebene "XY" und eine vertikale Drehwelle (29) zur Durchführung des schrägen Schnitts des Bleches sowie die seitlichen teleskopischen Führungen (8,8') aufweist, welche die beiden Schneidwerkzeug-Tragrahmen (1,2) auf jeder Seite miteinander verbinden, um die parallele Ausrichtung der beiden Messer (3, 3') beizubehalten, **dadurch gekennzeichnet, dass** die Schneidwerkzeuge (6,7) eine vertikale Wippbewegung (18) von einer Seite zur anderen ausführen und die Abweichung von der Parallelität (18') zwischen den seitlichen Führungen (8, 8') ausgleichen, zu welchem Zweck sie mit einem wippenden Halter (28) ausgestattet sind, der an der Drehwelle (29) des Tragrahmens befestigt ist.

2. Fliegende Schere nach Anspruch 1, **dadurch gekennzeichnet, dass** die Verbindung zwischen dem wippenden Halter (28) des Schneidwerkzeugs und der Drehachse (29) des Tragrahmens des Schneidwerkzeugs eine Spundung, die aus zwei zylindrischen Teilen (28',29') mit entgegengesetzten kegelstumpfförmigen Flächen besteht, deren Neigungswinkel (18) einer höchsten vorgegebenen Wippbewegung entspricht, und einen Riegel (30) umfasst, der die beiden eingerasteten zylindrischen Teile (28',29') verbindet, und als Wippwelle (18) des Schneidwerkzeugs (6,7) wirkt.

## Revendications

1. Cisaille volante avec éléments de guidage (8, 8') des outils de coupe pour la découpe de bande de tôle (27) qui avance dans une direction horizontale « X », du type qui possède deux outils de coupe supérieur (6) et inférieur (7) étendus dans une direction « Y » horizontale et supportés par un châssis (1,2)tournant respectif, et pourvus de lames (3,3') de coupe qui se trouvent sur une ligne de coupe sur la bande de tôle (27) après être déplacées dans une direction verticale « Z » en va-et-vient, au moyen d'une contre-rotation synchronisée des châssis (1,2) de l'outil de coupe, lesquels sont tirés pour ce déplacement de coupe par un jeu d'engrenages (24), chaque châssis (1,2) de l'outil de coupe possédant un membre axial (5a,5b) pour son pivotement sur un plan horizontal « XY », pourvu d'un axe (29) de pivotement vertical pour effectuer une coupe de tôle inclinée, et ces éléments de guidage (8,8') latéraux télescopiques qui assemblent les deux châssis de l'outil de coupe (1,2) de chaque côté pour maintenir le parallélisme entre les deux lames (3,3'), **caractérisée en ce que** les outils de coupe (6,7) effectuent un mouvement d'oscillation (18) vertical d'un côté et de l'autre en compensant l'écart de parallélisme (18') entre ces éléments de guidage latéraux (8,8'), le qui fait que ils possèdent un support (28) d'oscillation respectif accouplé à l'axe (29) de pivotement du châssis.

2. La cisaille volante de la revendication 1, **caractérisée en ce que** l'accouplement entre le support (28) d'oscillation de l'outil de coupe et l'axe (29) de pivotement du châssis (a,b) de l'outil de coupe comprend un encastrement mâle-femelle de deux parties (28',29') cylindriques à surfaces tronconiques opposées, dont l'angle (18) d'inclinaison est égal à une oscillation maximum préétablie, et une broche (30) qui relie les deux parties (28', 29') cylindriques encastrées en agissant comme axe de l'oscillation (18) de l'outil de coupe (6,7).
